# EUROPÄISCHE PATENTSCHRIFT

(11) **EP 2 324 376 B1**
(45) Veröffentlichungstag und Bekanntmachung des Hinweises auf die Patenterteilung: **27.04.2016**
(21) Anmeldenummer: 09777998.7
(22) Anmeldetag: 20.08.2009
(51) Int. Cl.: G02B 1/11, G02C 7/00

(54) **BRILLENLINSE MIT FARBNEUTRALER ANTIREFLEXBESCHICHTUNG UND VERFAHREN ZU DEREN HERSTELLUNG**
EYEGLASS LENS HAVING A COLOR-NEUTRAL ANTIREFLECTIVE COATING AND METHOD FOR THE PRODUCTION THEREOF
VERRE DE LUNETTES AVEC REVÊTEMENT ANTIREFLET DE COULEUR NEUTRE ET PROCÉDÉ DE FABRICATION ASSOCIÉ

(30) Priorität: 08.09.2008 DE 102008041869
(43) Veröffentlichungstag der Anmeldung: 25.05.2011
(73) Patentinhaber: Carl Zeiss Vision GmbH, 73430 Aalen (DE)
(72) Erfinder: VON BLANCKENHAGEN, Bernhard, 73433 Aalen (DE)
(74) Vertreter: Carl Zeiss AG - Patentabteilung
(86) Internationale Anmeldenummer: PCT/EP2009/006035
(87) Internationale Veröffentlichungsnummer: WO 2010/025829

(56) Entgegenhaltungen:
- EP-A1- 0 112 418
- EP-A2- 1 557 698
- DE-A1- 10 354 091
- US-A1- 2004 051 950
- US-A1- 2007 202 251

## Beschreibung

Die Erfindung betrifft ein Verfahren zur Herstellung einer_Brillenlinse mit einer Antireflexionsbeschichtung.

Einfallendes Licht wird an den Flächen einer Brillenlinse reflektiert. Der Anteil des reflektierten Lichts hängt vom Einfallswinkel und Brechungsindex der Linse ab. So beträgt beispielsweise der reflektierte Lichtanteil an jeder Oberfläche einer unbehandelten Brillenlinse mit Brechungsindex 1,5 bei senkrechtem Lichteinfall etwa 4 %, so dass nur etwa 92 % des auftreffenden Lichts die Brillenlinse auch transmittiert. Das von der Brillenlinse reflektierte Licht sorgt für störende Blendeffekte sowohl auf deren Vorderseite als auch auf deren dem Auge des Brillenträgers zugewandten Rückseite. Die Reflexe auf der Vorderseite der Brillenlinse von einem Gegenüber als störend empfunden. Das von der Rückfläche reflektierte Licht führt dazu, dass der Brillenträger neben anderen unerwünschten optischen Effekten auch ein verschwommenes Bild wahrnimmt.

Entspiegelungen eliminieren weitgehend diese störenden Reflexe, da sie die durch die Brillenlinse hindurch tretende Lichtmenge erhöhen. Brillenlinsen mit einer qualitativ hochwertigen Entspiegelung auf der Vorder- und Rückseite weisen einen Lichttransmissionsgrad von etwa 98 % auf, was einem Lichtreflexionsgrad von ungefähr 1 % pro Oberfläche entspricht.

Üblicherweise wird die Entspiegelung mit Hilfe einer sogenannten Antireflexionsbeschichtung erreicht. Die Reflexminderung beruht hierbei auf dem Prinzip der Interferenz. Die Antireflexionsbeschichtung besteht aus einer Mehrzahl monolithisch übereinander angeordneter dünner Schichten von einigen zehn Nanometern Dicke
mit unterschiedlichen Brechungsindizes. Die von den Schichtoberflächen reflektierten Lichtwellen überlagern sich und löschen sich im Idealfall gegenseitig aus.

Aufgrund der endlichen Anzahl der Schichten einer Antireflexbeschichtung ist es nicht möglich, die Reflexion über das gesamte sichtbare Spektrum vollständig zu eliminieren.

Antireflexionsbeschichtungen führen daher im Allgemeinen zu einem farbigen Restreflex. Die Reflexionsfarbe wird von der Lage des Maximums der Reflexionskurve als Funktion der Wellenlänge bestimmt.

Ein Qualitätskriterium für Antireflexionsbeschichtungen für Brillenlinsen ist die Farbe des Restreflexes. Diese bestimmt zu einem nicht geringen Anteil das kosmetische Erscheinungsbild der Brillenlinse. Für Brillenlinsen übliche Antireflexionsbeschichtungen haben einen grünen Restreflex. Beispielsweise erreicht die Reflexion einer Oberfläche des entspiegelten Brillenglases einen Wert zwischen 0,75 % und 1,5 % bei einer Wellenlänge von 500 nm. In der US 2007/0202251 A1, von der die Erfindung ausgeht, ist eine Brillenlinse mit einer Antireflexionsbeschichtung beschrieben, welche unter Beleuchtung mit einem natürlichen Tageslichtspektrum einen farbneutral erscheinenden Restreflex erzeugt.

Die im Dokument US 2007/0202251 A1 beschriebene Antireflexionsbeschichtung hat sich für die in diesem Dokument beschriebene Anwendung bewährt. Die dort beschriebene Anwendung bezieht sich auf eine Antireflexions-Beschichtung die direkt auf einem Substrat wie beispielsweise einem Brillenglas aufgebracht wird.

Moderne Beschichtungen für Kunststoffbrillengläser sind anders aufgebaut als in der Druckschrift US 2007/0202251 A1 beschrieben. Die Antireflexbeschichtung wird nicht direkt auf das Brillenglas aufgebracht. Vielmehr wird dieses zuvor mit einer Kratzschutzschicht versehen. Dies ist notwendig, da Kunststoffe für Brillengläser wie etwa Polythiourethane eine sehr geringe Kratzfestigkeit aufweisen. Um das Produkt Brillenglas kratzfest zu machen, werden Brillengläser beispielsweise in einem Tauchverfahren mit einem Hartlack beschichtet. Nach der Aushärtung dieses Hartlacks weisen die so beschichteten Brillengläser eine erhöhte Kratzfestigkeit auf. Die Dicke einer solchen ausgehärteten Schicht liegt typischerweise zwischen 2 und 4 Mikrometer.

Bei vielen Brillenglasprodukten wird die Antireflexionsschicht auf diese Kratzschutzschicht aufgebracht.

Obwohl sich die in dem Dokument US 2007/0202251 A1 beschriebene Antireflexionsbeschichtung dem Grunde nach auch für Kunststoffbrillengläser mit Kratzschutz- und Antireflexbeschichtung bewährt hat, stellt man fest, dass der Restreflex zwar unter natürlicher Sonneneinstrahlung nicht bewusst wahrgenommen wird, beispielsweise in Räumen mit Leuchtstoffröhrchen- Beleuchtung jedoch sowohl vom Brillenträger als auch vom Gegenüber als störend empfunden wird.

Auch die DE 10 354 091 A1 beschreibt Brillengläser mit Antireflexbeschichtungen zur Erzielung eines farbneutralen Restreflexes unter senkrechtem Lichteinfall.

Das Dokument EP 1 557 698 A2 beschäftigt sich mit zwei Themen, nämlich der Minimierung des wahrgenommenen Reflexes für den Brillenträger selbst und der Kontrolle der Wahrnehmbarkeit der Reflexfarbe für einen den Brillenträger betrachtenden externen Beobachter. Das Dokument stellt fest, dass die für den externen Beobachter wahrnehmbare Reflexfarbe sowohl vom Einfallswinkel als auch von der Lichtart/Lichtquelle abhängt. Um dies zu demonstrieren, werden die Farbkoordinaten bei Lichteinfall auf ein mit einer Antireflexionsbeschichtung im Hinblick auf für einen Brillenträger selbst wahrnehmbarem minimalen Reflex optimiertes Brillenglas unter unterschiedlichen Einfallswinkeln für unterschiedliche Lichtquellen, nämlich Tageslicht, Wolframlampe und Fluoreszenzlampe gezeigt. Die Druckschrift schlägt vor, die Reflexfarbe im Hinblick auf eine möglichst unauffällige Wahrnehmbarkeit hin zu optimieren. Insbesondere wird vorgeschlagen, die Reflexfarbe an den Hintergrund anzupassen. Alternativ wird eine Anpassung an die Augenempfindlichkeit vorgeschlagen. Schließlich wird vorgeschlagen, die Reflexfarbe so zu optimieren, dass sie eine möglichst geringe Winkelabhängigkeit zeigt.

Die Aufgabe der Erfindung besteht in der Bereitstellung eines Verfahrens zur Herstellung einer Brillenlinse mit einer Antireflexbeschichtung, deren Restreflex nicht nur bei natürlicher Tageslichtbeleuchtung sondern auch bei von der natürlichen Tageslichtbeleuchtung abweichender Beleuchtung farbneutral empfunden wird.

Diese Aufgabe wird durch ein Verfahren mit den Merkmalen des Patentanspruchs 1 gelöst.

Die Fig. 3 der US 2007/0202251 A1 stellt den prozentualen Reflexionsgrad einer konventionellen Antireflexionsbeschichtung mit farbigem Restreflex dem prozentualen Reflexionsgrad einer Antireflexbeschichtung mit weißem Restreflex als Funktion der Wellenlänge im sichtbaren Spektralbereich gegenüber. Der Darstellung entnimmt man, dass die spektrale Reflexionskurve der Antireflexbeschichtung mit weißem Restreflex im sichtbaren Spektralbereich annährend als Horizontale verläuft. Eingehende Untersuchungen haben gezeigt, dass der Restreflexes nur unter natürlichem Tageslicht farbneutral/weiß wahrgenommen wird, jedoch beispielsweise in Räumen mit Leuchtstoffröhren-Beleuchtung farbig erscheint.

Diese subjektive Wahrnehmung lässt sich durch Berechnungen untermauern. Der Berechnung wird eine Reflexionskurve zugrunde gelegt, wie sie der Figur 3 der US 2007/0202251 A1 für die Antireflexionsbeschichtung zur Erzeugung eines weißen Restreflexes zu entnehmen ist. Unter Tageslichtbeleuchtung, repräsentiert durch die sogenannte CIE-Normbeleuchtung D65 (x=0,312713, y=0,329016 im CIE-XYZ-Farbkoordinatensystem; Tageslicht eines wolkenlosen Himmels mittags am Nordfenster, Spektrum einem Schwarzkörper bei 6504 Kelvin ähnlich) ergeben sich im CIE-LAB-Farbkoordinatensystem für die o.a. Reflexionskurve die in der Tabelle 1 dargestellten Koordinaten für die Farbwiedergabequalität Ra:

**Tabelle 1: LAB-Farbkoordinaten einer gemäß Fig. 3 von US 2007/0202251 A1 farbneutralen Entspiegelung des D65-Standards**

| **D65** | **a*** | **b*** | **L*** |
|---|---|---|---|
| **Ra** | 0,0 | 0,0 | 6,3 |

Wird zur Berechnung der Farbkoordinaten a* und b* eine Beleuchtungskurve einer typischen Leuchtstoffröhre herangezogen, erhält man für die gleiche Reflexionskurve die in der folgenden Tabelle 2 dargestellten Farbkoordinaten:

**Tabelle 2 LAB-Farbkoordinaten einer gemäß Fig 3 von US 2007/0202251 A1 farbneutralen Entspiegelung bei Beleuchtung mit einer herkömmlichen Leuchtstoffröhre**

| **Röhre** | **a*** | **b*** | **L*** |
|---|---|---|---|
| **Ra** | -3,4 | -3,3 | 6,3 |

Die Beträge der Farbkoordinaten aus Tabelle 2 sind für a* und b* größer als 2. Somit wird der Restreflex bei Beleuchtung mit einer typischen Leuchtstoffröhre nicht mehr als farbneutral wahrgenommen.

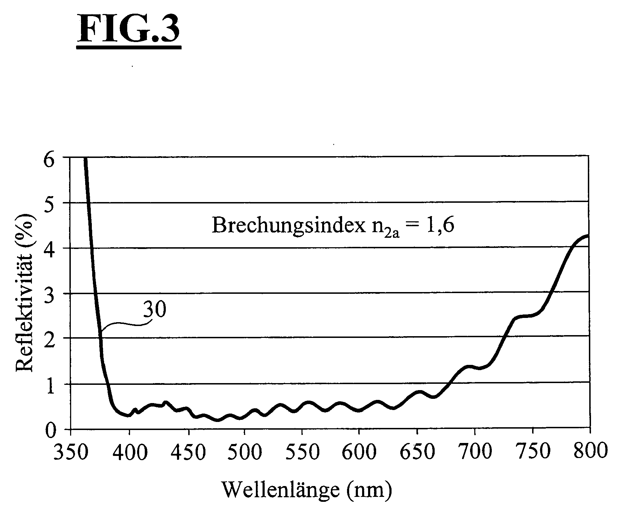

Bei Kunststoffbrillengläsern mit Kratzschutz- und Antireflexbeschichtung ist der Unterschied in der Wahrnehmung unter unterschiedlichen Beleuchtungsbedingungen noch gravierender. Häufig finden in der Industrie zur Herstellung der Kratzschutzschicht Hartlacke Verwendung, die sich im Brechungsindex nₕ vom Brechungsindex nₛ des (Brillenglas-) Substrates unterscheiden. Ein Beispiel für einen solchen Unterschied ist die Verwendung eines Hartlackes mit einer Brechzahl von nₕ=1.62 auf einem Substrat mit einer Brechzahl von nₛ= 1.60 (Brechzahlangaben beziehen sich auf eine Wellenlänge von 550 nm). Dieser Unterschied in der Brechzahl hat zur Folge, dass der Verlauf der Reflexion als Funktion der Wellenlänge (im folgenden Reflexionskurve genannt) nicht mehr glatt verläuft (wie beispielsweise in Fig. 3 der Anmeldung US 2007/0202251 A1), sondern dass eine Oszillation überlagert ist (siehe Fig. 3 dieser Anmeldung). Der Abstand der Maxima dieser Oszillationen (in Abbildung 3 etwa 30 nm) hängt von der Dicke der Hartlack-Schicht ab. Diese Oszillationen haben einen großen Einfluss auf die Farbe des Restreflexes der Antireflexionsbeschichtung, insbesondere dann, wenn die Reflexionsfarbe unter unterschiedlichen Beleuchtungsbedingungen beobachtet wird. Im Allgemeinen gilt, dass die Reflexionsfarbe einer Antireflexionsbeschichtung die ein Beobachter wahrnimmt von den Beleuchtungsbedingungen abhängt. Der Farbeindruck, den ein Beobachter wahrnimmt, ist unterschiedlich, je nachdem ob der Farbreflex unter Tageslicht oder unter künstlichem Licht beobachtet wird. Besonders deutlich sind die Unterschiede, wenn der Farbreflex unter Tageslicht mit dem unter der Beleuchtung mit Leuchtstoffröhren verglichen wird.

Der der vorliegenden Erfindung zugrunde liegende Gedanke besteht nunmehr darin, den Unterschied der Farbe des Restreflexes der Antireflexionsbeschichtung bei unterschiedlichen Beleuchtungen zu minimieren, um ein gleichbleibendes Erscheinungsbild der Reflexfarbe unabhängig von den Umgebungs- und Beleuchtungsbedingungen zu gewährleisten. Demgemäß wird eine Brillenlinse nach dem erfindungsgemäßen Verfahren mit einer Antireflexionsbeschichtung versehen, welche nicht nur unter Beleuchtung mit einem natürlichen Tageslichtspektrum einen farbneutral erscheinenden Restreflex erzeugt, sondern auch unter einer Beleuchtung mit einem vom natürlichen Tageslichtspektrum abweichenden Beleuchtungsspektrum. Insbesondere wird dies auch für Brillengläser gewährleistet, die unter der Antireflex-Beschichtung mit einer Kratzschutzschicht versehen sind, deren Brechzahl sich von der Brechzahl des Brillenglas-Substrates unterscheidet. Konkret gelingt die Lösung der gestellten Aufgabe, wenn bei der Auslegung des Interferenzschichtsystems, aus welchem die Antireflexionsbeschichtung aufgebaut ist, der Tatsache Rechnung getragen wird, dass der farbneutrale/weiße Eindruck des Restreflexes bei unterschiedlichen Beleuchtungsbedingungen zu gewährleisten ist.

Im Allgemeinen ist es ausreichend, zwei extreme Beleuchtungsbedingungen heranzuziehen, unter denen die genannte Bedingung erfüllt ist, nämlich bei Tageslicht (z.B. D65-Beleuchtung) und bei Beleuchtung mit dem Beleuchtungsspektrum einer Glühlampe (z.B. CIE-Normbeleuchtung A, x=0,4476, y=0,4074 im CIE-XYZ-Farbkoordinatensystem) oder einer Gasentladungslampe, wie z.B. einer Leuchtstofflampe entsprechend der CIE-Normbeleuchtung C mit den CIE-XYZ-Farbkoordinaten x=0,3101 und y=0,3162. Selbstverständlich ist es auch möglich, anstelle der CIE-Normbeleuchtung A einer Glühlampe oder der CIE-Normbeleuchtung C einer Leuchtstofflampe das Beleuchtungsspektrum einer anderen mit einem fluoreszierenden Material beschichteten Quecksilberdampflampe oder einer Leuchtgaslampe, wie z.B. einer Neonlampe, oder das Beleuchtungsspektrum einer sonstigen, üblicherweise verwendeten Lichtquelle als zweites (oder ggf. weiteres) Beleuchtungsspektrum heranzuziehen, unter dem der von der Brillenlinse kommende Restreflex (wenigstens annähernd) weiß bzw. farbneutral erscheint.

Weißes Licht ist gemäß DIN 5035 in drei Farbtemperaturbereiche eingeteilt, wie in der nachfolgend angegebenen Tabelle 3 skizziert.

**Tabelle 3: Farbtemperaturbereiche nach DIN 5035**

| **Abkürzung** | **Bezeichnung** | **Farbtemperatur** | **Anwendung** |
|---|---|---|---|
| **ww** | Warmweiß / warm white | < 3300 K | Konferenz- u. Büroräume, Gasträume, Wohnräume |
| **nw** | Neutralweiß / cool white | 3300 K bis 5300 K | Schulen, Büros, Werkstätten, Ausstellungsräume |
| **tw** | Tageslicht / day light | > 5300 K | Tageslichtersatz in geschlossenen Räumen und für technische Anwendungen |

Nach der Lehre der Erfindung kann die Antireflexionsbeschichtung derart ausgebildet werden, dass sie sowohl einen farbneutral erscheinenden Restreflex erzeugt, wenn sie mit einem natürlichen Tageslichtspektrum beleuchtet wird als auch wenn sie mit einem Beleuchtungsspektrum einer künstlichen Lichtquelle mit Beleuchtungsspektrum eines der Normfarbtemperaturbereiche Warmweiß, Neutralweiß oder Tageslicht beleuchtet wird.

Unter farbneutral erscheinendem Restreflex versteht der Fachmann einen Reflex, dessen Farbkoordinate a* des L*a*b*-Farbkoordinatensystems im Bereich zwischen [-1,5 ]<a*<[1,5], vorzugsweise jedoch im Bereich zwischen [-1,3]<a*<[1,1] liegt. In entsprechender Weise liegt die Farbkoordinate b* des L*a*b*-Farbkoordinatensystems im Bereich zwischen [-1,5]<b*<[1,5], vorzugsweise jedoch im Bereich zwischen [-1,4]<b*<[1,2]. Die Helligkeitsfarbkoordinate L* des L*a*b*-Farbkoordinatensystems kann im Bereich zwischen [0]<L*<[7], vorzugsweise jedoch zwischen [4]<L*<[6] liegen. Die angegebenen Grenzen in den Farbkoordinaten für die Wahrnehmung eines farbneutralen Restreflexes können von Mensch zu Mensch unterschiedlich sein, je nachdem wie gut die Farbwahrnehmung des Individuums ausgeprägt ist.

Die Antireflexionsbeschichtung der Brillenlinse kann z.B. ein Interferenzschichtsystem mit einem Schichtstapel aus abwechselnd hoch- und niedrigbrechenden Materialien umfassen. Die zur Verwendung kommenden Materialien aus denen die Schichten gebildet werden sind im sichtbaren Spektralbereich transparent. Die Schichtdicken der einzelnen Schichten sind i.A. kleiner als die Wellenlänge des sichtbaren Lichts. Es kann sich z.B. um ein Schichtsystem aus drei unterschiedlichen Schichtmaterialien handeln. Die dem Substrat nächstliegende Schicht ist z.B. aus einem Material mit einem möglichst niedrigen Brechungsindex. Die darauf folgende Schicht ist aus einem Material mit einem möglichst hohen Berechnungsindex und das Material der dritten Schicht weist einen Brechungsindex mit einem Wert zwischen den beiden anderen Materialien auf. Z.B. kann das Interferenzschichtsystem auch folgende Schichtfolge aufweisen (Reihenfolge vom Substrat weg): 22 nm HfO₂, 14 nm SiO₂, 36 nm HfO₂, 88 nm Nb₂O₅, 24 nm HfO₂,75 nm SiO₂. Dabei weist das verwendete Schichtmaterial SiO₂ die niedrigste, das Material Nb₂O₅ die höchste und das Material HfO₂ eine mittlere Brechzahl auf. Es kann weiterhin vorteilhaft sein, auf die äußerste Schicht eine weitere Schicht aufzubringen, die die Oberflächeneigenschaften des Antireflexionsschichtsystems derart verändert, dass sich das Brillenglas besonders leicht reinigen lässt. Ist dies der Fall ist das bei der Auslegung der einzelnen Schichtdicken zu berücksichtigen. Solche Pflegeleichtbeschichtungen sind hydrophobe und/oder oleophobe Beschichtungen mit einer Oberflächenenergie unter 20mN/m.

Zwischen Brillenlinse und Antireflexbeschichtung kann eine Kratzschutzschicht vorgesehen sein. Dies ist insbesondere dann von Vorteil, wenn ein sehr weiches Brillenlinsenmaterial, wie z.B. Polycarbonat, Polythiourethan etc. eingesetzt wird. Günstig ist es, wenn die Brechzahl der Kratzschutzschicht die gleiche Brechzahl aufweist wie die Brillenlinse. Brechzahlunterschiede bis zu 0,5 sind jedoch tolerierbar. Schichtdicken zwischen 2 und 4 µm sind üblich.

Das erfindungsgemäße Verfahren zum Herstellen einer Brillenlinse mit einer Antireflexionsbeschichtung umfasst folgende Verfahrensschritte:

In einem ersten Schritt a) wird eine optische Linse aus einem für sichtbares Licht transparenten Material, wie z.B. Glas (z.B. Silikatglas), oder Kunststoff (z.B. Polycarbonat, Polymethylmethacrylat, Polythiourethan, oder Polyalyldiglytolcarbonat) bereitgestellt.

In einem zweiten Schritt b) kann die Linse mit einer Kratzschutzschicht versehen werden. Diese Schicht wird z.B. durch ein Tauchverfahren mit einem geeigneten Hartlack aufgebracht. Alternativ kann die Schicht auch durch einen Aufschleudervorgang, auch Spin-coating genannt, aufgebracht werden. Idealerweise ist die Brechzahl des Materials der Kratzschutzschicht gleich der des Linsenmaterials. Sie kann aber auch davon abweichen. Die Abweichung kann bis zu 0,5 groß sein. Je nach Anwendung kann auf diesen Schritt auch verzichtet werden.

In einem dritten Schritt c) wird eine die Antireflexionsbeschichtung bildende Schichtfolge aus abwechselnden Schichten aus hochbrechendem (H) und niedrigbrechendem (L) Material aufgebracht. In speziellen Fällen kann es vorteilhaft sein, ein Schichtmaterial (M) mit einem Brechungsindex, der zwischen dem der Materialien H und L liegt, zu verwenden. Diese Schichtfolge (zum Beispiel bestehend aus vier Schichten H/L/H/L oder H/L/M/L (Reihenfolge vom Substrat aus) kann z.B. mit Hilfe eines Vakuumprozesses, wie Verdampfen oder Kathodenzerstäubung, aufgebracht werden. Das Aufbringen der Antireflexionsbeschichtung erfolgt dabei mit der Maßgabe, dass die Antireflexionsbeschichtung sowohl unter Beleuchtung mit einem natürlichen Tageslichtspektrum als auch unter einer Beleuchtung mit einem vom natürlichen Tageslichtspektrum abweichenden Beleuchtungsspektrum einen farbneutral erscheinenden Restreflex erzeugt.

Die Auslegung des Interferenzschichtsystems, welches die Antireflexionsbeschichtung bildet, wird z.B. so durchgeführt, dass zwei Beleuchtungsbedingungen numerisch berücksichtigt werden. Diese sind typischerweise das natürliche Tageslicht und eine Beleuchtungsbedingung basierend auf Leuchtstoffröhren. Zur Auslegung des Interferenzschichtsystems können numerische Optimierungsverfahren zum Einsatz kommen, wie sie aus dem betriebsinternen Stand der Technik bekannt sind. Diese beruhen darauf, dass Zielwerte für den Farbeindruck des Restreflexes vorgegeben werden. Zu den Farbzielwerten werden simultan zwei Beleuchtungsarten mit vorgegeben. Die einzelnen Schichtdicken und/oder Materialien werden dann geeignet verändert bis der Farbreflex dem Zielwert möglichst genau unter beiden Beleuchtungsbedingungen entspricht.

Die Erfindung wird im Folgenden anhand von Zeichnungen erläutert. Es zeigen:
- Figur 1: normierte Emissionsspektren des D65-Standards und einer herkömmlichen Leuchtstoffröhre,
- Figur 2: Antireflexionsbeschichtung nach der Erfindung auf einer Brillenlinse,
- Figur 3: Reflexionssprektrum einer Brillenlinse mit erfindungsgemäß ausgelegter Antireflexionsbeschichtung nach der Figur 2.

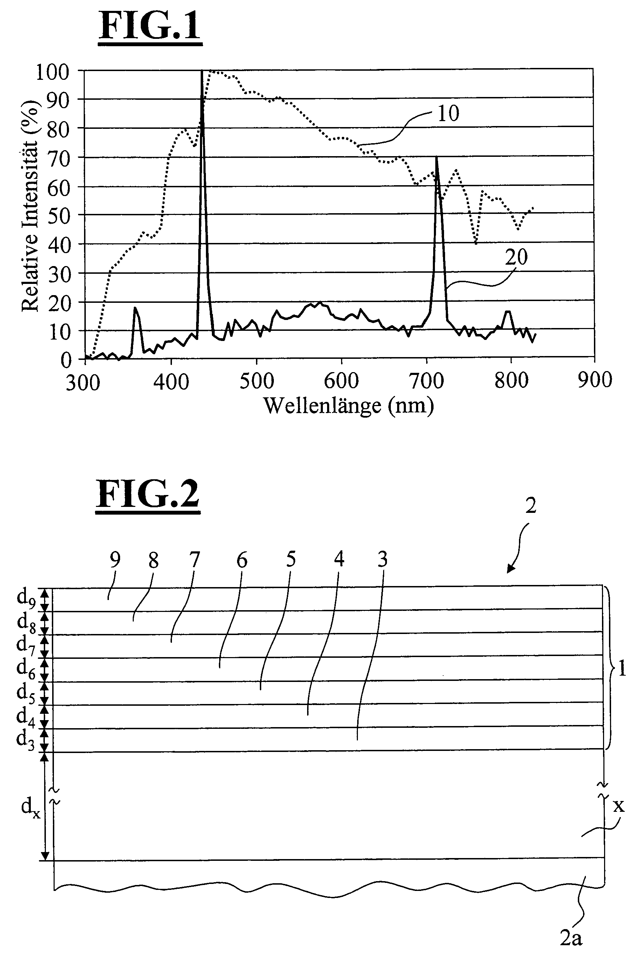

Die Figur 1 zeigt die auf 100 % Intensität normierten Beleuchtungskurven von Tageslicht 10 (hier mit dem Fachmann bekannten D65 Standard angenähert) und einer Leuchtstoffröhre 20.
Berücksichtigt man beide Beleuchtungen 10, 20 simultan bei der Auslegung des Interferenzschichtsystems, so erhält man für die in der Figur 2 (nicht maßstäblich gezeichnete) Antireflexionsbeschichtung 1 einer Brillenlinse 2 die in der Figur 3 dargestellte spektrale Reflexionskurve 30.

Die Antireflexionsbeschichtung 1 umfasst in dem dargestellten Ausführungsbeispiel eine Kratzschutzschicht x und sieben Einzelschichten 3, 4, 5, 6, 7, 8, 9, die das interferenzoptische System bilden.

Die das Substrat bildende, einen Brechungsindex n₂ₐ von 1,6 aufweisende Brillenlinse 2a ist zunächst mit einer Kratzschutzschicht x versehen. Diese hat eine Brechzahl nₓ von 1,6 und eine Dicke dₓ von 2,5 µm. Auf diese Kratzschutzschicht x wird das als interferenzoptisches Schichtsystem wirkende System der Antireflexionsbeschichtung 1 aufgebracht. Die Schichten 7, 5 und 3 bestehen aus dem Material Hafniumoxid mit einer Brechzahl n₇=n₅=n₃ von 1,98 bei einer Wellenlänge von 550 nm. Die Schicht 7 hat eine Dicke dₓ von 16 nm, die Schicht 5 eine Dicke d₅ von 77 nm die Schicht 3 eine Dicke d₃ von 31 mm. Die Schichten 4 und 8 bestehen aus Siliziumdioxid mit einer Brechzahl n₄=n₈ von 1,45 bei 550 nm. Die Schicht 4 hat eine Dicke d₄ von 36 nm, die Schicht 8 eine Dicke d₈ von 65 nm. Die Schicht 6 besteht aus Nb₂O₅ mit einer Brechzahl n₆ von 2.4 bei 550 nm und mit einer Dicke d₆ von 31 nm. Die Schicht 9 ist eine Pflegeleichtschicht, die zum Einen Teil des interferenzoptischen Schichtsystems ist, zum Anderen durch ihre chemischen Oberflächeneigenschaften eine leichte Reinigbarkeit der Brillenlinse gewährleistet. Diese Schicht besteht aus einem fluororganischen Material mit einer Brechzahl n₉ von 1.38 bei 550 nm und weist eine Dicke d₉ von 5 nm auf.

Der in der Figur 3 skizzierte Verlauf der spektralen Reflexionskurve 30 stellt sicher, dass das Erscheinungsbild unter unterschiedlichen Beleuchtungen keiner starken Änderung unterliegt. Die Farbkoordinaten a* und b* bei den unterschiedlichen Beleuchtungssituationen sind der nachfolgend dargestellten Tabelle 4 zu entnehmen.

**Tabelle 4: LAB-Farbkoordinaten des Restreflexes des D65-Standards und der Leuchtstoffröhre nach Tabelle 2 von der Antireflexionsbeschichtung nach der Figur 2**

| **Ra** | **a*** | **b*** | **L*** |
|---|---|---|---|
| **D65** | 1,05 | 1,16 | 4,07 |
| **Leuchtstoffröhre** | -1,22 | -1,35 | 3,92 |

Im Vergleich zu dem in der US 2007/020225 A1 beschriebenen Schichtsystem liegt der Betrag der Farbkoordinaten a* und b* im Lab-Koordinatensystem in etwa bei 1, was einer neutralen/weißen Farbwahrnehmung entspricht.

Neben dem oben angeführten Beispiel, kann eine derartige Lösung auch für andere Schichtmaterialien erreicht werden. Dabei ist dem Fachmann bekannt, dass es für jede Materialkombination nur eine optimale Lösung gibt. Unter einer optimalen Lösung versteht der Fachmann die Schichtdicken, die zu möglichst kleinen Werten für a* und b* führen, wenn beide Beleuchtungsarten simultan verwendet werden.

Es kann vorteilhaft sein anstelle von Nioboxid ein anderes Material mit möglichst hohem Brechungsindex zu verwenden wie Beispielsweise Titandioxid, Tantalpentoxid oder kommerziell erhältliche Materialmischungen wie H3, H4 oder H5 aus der Patinal Produktserie der Firma Merck. Ebenso kann es vorteilhaft sein anstelle von Hafniumdioxid andere Materialien mit einer mittleren Brechzahl zu verwenden wie Beispielsweise Zirkonoxid, Aluminiumoxid oder kommerziell erhältliche Materialmischungen wie M1, M2 oder M3 aus der Patinal Produktserie der Firma Merck.

## Patentansprüche

1. Verfahren zum Herstellen einer Brillenlinse (2) für einen Brillenträger mit einer Antireflexionsbeschichtung (1) mit folgenden Verfahrensschritten:
a) Bereitstellen einer optischen Linse (2a),
b) Optional Aufbringen einer Kratzschutzschicht (x)
c) Aufbringen einer die Antireflexionsbeschichtung (1) bildenden Schichtfolge aus Schichten (3, 4, 5, 6, 7, 8, 9) mit hoch-, niedrig- und mittel-brechendem Material auf die optische Linse (2a), wobei das Aufbringen der Antireflexionsbeschichtung (1) mit der Maßgabe erfolgt, dass die Antireflexionsbeschichtung (1) unter Beleuchtung mit einem natürlichen Tageslichtspektrum (10) einen farbneutral erscheinenden Restreflex (30) erzeugt, wobei das Aufbringen der Antireflexionsbeschichtung (1) mit der weiteren Maßgabe erfolgt, dass die Antireflexionsbeschichtung (1) auch unter einer Beleuchtung mit einem vom natürlichen Tageslichtspektrum (10) abweichenden Beleuchtungsspektrum (20) einen farbneutral erscheinenden Restreflex (30) erzeugt, wobei die Auslegung der Antireflexionsbeschichtung (1) dadurch erfolgt, dass ein gemeinsamer Farbzielwert für den unter natürlichem Tageslicht hervorgerufenen Restreflex (30) der Antireflexbeschichtung (1) und für den unter der abweichenden Beleuchtung hervorgerufenen Restreflex (30) der Antireflexbeschichtung (1) vorgegeben wird und dass eine einzelne oder mehrere Dicken und/oder Materialien von den die Antireflexionsbeschichtung (1) bildenden Schichten derart variiert werden, bis die Abweichung vom gemeinsamen Farbzielwert
eines berechneten Farbwerts des Restreflexes (30) für das natürliche Tageslichtspektrum (1) und die Abweichung vom gemeinsamen Farbzielwert
eines berechneten Farbwerts des Restreflexes (30) für das abweichende Beleuchtungsspektrum (20) vorgegebene Schwellwerte unterschreiten, wobei die Schwellwerte so gewählt werden, dass der Farbeindruck des jeweiligen Restreflexes (30) unter beiden Beleuchtungsbedingungen neutral erscheint, nämlich dass eine Farbkoordinate a* des L*a*b*-Farbkoordinatensystems im Bereich zwischen [-1,5] < a*< [1,5], eine Farbkoordinate b* im Bereich zwischen [-1,5]< b* <[1,5] und eine Farbkoordinate L* im Bereich zwischen [0] < L* < [7] ist.

## Claims

1. Method for producing a spectacle lens (2), for a spectacle wearer, with an antireflection coating (1), comprising the following method steps:
a) providing an optical lens (2a),
b) optionally applying a scratch protection layer (x),
c) applying a sequence of layers, forming the antireflection coating (1), of layers (3, 4, 5, 6, 7, 8, 9) with high refractive index, low refractive index and medium refractive index material onto the optical lens (2a), wherein the application of the antireflection coating (1) is carried out with the stipulation that the antireflection coating (1) generates a residual reflection (30) appearing colour neutral under illumination with a natural daylight spectrum (10), wherein the application of the antireflection coating (1) is carried out with the further stipulation that the antireflection coating (1) generates a residual reflection (30) appearing colour neutral even under illumination with an illumination spectrum (20) deviating from the natural daylight spectrum (10), wherein the design for the antireflection coating (1) is carried out by virtue of a common colour target value being prescribed for the residual reflection (30) of the antireflection coating (1) caused under natural daylight and for the residual reflection (30) of the antireflection coating (1) caused under the deviating illumination and of a single one or a plurality of thicknesses and/or materials of the layers forming the antireflection coating (1) are varied in this manner until the deviation from the common colour target value of a calculated colour value of the residual reflection (30) for the natural daylight spectrum (1) and the deviation from the common colour target value of a calculated colour value of the residual reflection (30) for the deviating illumination spectrum (20) drop below predetermined thresholds, wherein the thresholds are selected in such a way that the colour impression of the respective residual reflection (30) appears neutral under both illumination conditions, namely that a colour coordinate a* of the L*a*b* colour coordinate system is in the region between [-1.5]<a*<[1.5], a colour coordinate b* is in the region between [-1.5]<b*<[1.5] and a colour coordinate L* is in the region between [0]<L*<[7].

## Revendications

1. Procédé de fabrication d'un verre de lunette (2) pour un porteur de lunette avec un revêtement antireflet (1), comprenant les étapes de procédé suivantes :
a) fourniture d'un verre optique (2a),
b) application optionnelle d'une couche anti-rayures (x)
c) application d'une succession de couches formant le revêtement antireflet (1), constituée de couches (3, 4, 5, 6, 7, 8, 9) de matériau très réfringent, faiblement réfringent et moyennement réfringent sur le verre optique (2a), l'application du revêtement antireflet (1) s'effectuant de manière à ce que le revêtement antireflet (1) produise, sous un éclairage avec un spectre de lumière du jour naturelle (10), un reflet résiduel apparaissant de couleur neutre (30), l'application du revêtement antireflet (1) s'effectuant en outre de manière à ce que le revêtement antireflet (1), même sous un éclairage avec un spectre de lumière (20) s'écartant du spectre de lumière du jour naturelle (10), produise un reflet résiduel apparaissant de couleur neutre (30), la conception du revêtement antireflet (1) s'effectuant en prédéfinissant une valeur cible de couleur commune pour le reflet résiduel (30) du revêtement antireflet (1), obtenu avec la lumière du jour naturelle et pour le reflet résiduel (30) du revêtement antireflet (1), obtenu avec l'éclairage différent, et par le fait qu'une ou plusieurs épaisseurs et/ou un ou plusieurs matériaux des couches formant le revêtement antireflet (1) sont modifiés jusqu'à ce que l'écart par rapport à la valeur cible de couleur commune d'une valeur de couleur calculée du reflet résiduel (30) pour le spectre de lumière du jour naturelle (1) et l'écart par rapport à la valeur cible de couleur commune d'une valeur de couleur calculée du reflet résiduel (30) pour le spectre de lumière différent (20) soient en-dessous de valeurs de seuil prédéfinies, les valeurs de seuil étant choisies de telle sorte que l'impression de couleur du reflet résiduel respectif (30) semble neutre dans les deux conditions d'éclairage, à savoir qu'une coordonnée de couleur a* du système de coordonnées de couleur L*a*b* soit dans la plage comprise entre [-1,5] < a* < [1,5], qu'une coordonnée de couleur b* soit dans la plage comprise entre [-1,5] < b* < [1,5] et qu'une coordonnée de couleur L* soit dans la plage comprise entre [0] < L* < [7].
